# EUROPEAN PATENT APPLICATION

(11) **EP 2 905 226 A1**
(43) Date of publication of application: **12.08.2015**
(21) Application number: 15153507.7
(22) Date of filing: 02.02.2015
(51) Int. Cl.: B64D 11/06, B60N 2/22

(54) **Passenger seat for an aircraft**

(30) Priority: 05.02.2014 DE 102014101441
(71) Applicant: Airbus Operations GmbH, 21129 Hamburg (DE)
(72) Inventor: SCHUMACHER, Markus, 21129 Hamburg (DE); GONNSEN, Johannes, 21129 Hamburg (DE)
(74) Representative: Maiwald Patentanwalts GmbH

(57) **Abstract**

Stated is a passenger seat (10) for an aircraft (110), which passenger seat (10) comprises a seat pan (12) for providing a seat surface (14) for a passenger, and a backrest (16) with a lean-against surface (18) for leaning against, and a rear surface (20) situated opposite the lean-against surface (18). In this design the rear surface (20) comprises two indentations (66a, 66b), with each of them designed to at least partially accommodate a knee (68a, 68b) of a further passenger (70) seated behind the passenger.

## Description

### Technical field

Generally speaking, the invention relates to interior components for an aircraft. In particular, the invention relates to a passenger seat for use in a passenger cabin of an aircraft, and to an aircraft comprising such a passenger seat.

### Background to the invention

In means of transport for the transport of passengers, in particular in aircraft, the best possible use of the space available in a passenger cabin of the means of transport is of importance. In particular, for economic reasons passenger cabins have the greatest possible number of passenger seats, for example in that the seat pitch, i.e. the distance between individual seat rows, is reduced. In this endeavor, the minimum comfort provided to passengers must always be taken into account.

DE 10 2008 053 140 B3 describes a passenger seat for a passenger cabin of an aircraft, which passenger seat comprises an adjustment device that makes it possible to adaptively adjust the seat surface of the passenger seat to persons of different body size.

DE 100 57 208 A1 and EP 1 207 074 A1 describe a seat device and/or a reclining position device, in particular a passenger seat, with an adjustable backrest, which passenger seat comprises a seat-surface spring arrangement within a seat frame, and means for adjusting the surface rigidity of the seat surface.

### Summary of the invention

It is the object of the invention to provide a comfortable, lightweight and robust passenger seat for an aircraft.

This object is met by the subject of the independent claim. Further embodiments are disclosed in the dependent claims and in the following description.

One aspect of the invention relates to a passenger seat for an aircraft, for example a passenger aircraft. The passenger seat can be arranged in a passenger cabin of the aircraft, for example in a seat arrangement comprising several rows side by side and/or one behind the other.

According to one embodiment of the invention, the passenger seat comprises a seat pan for providing a seat surface for a passenger and a backrest with a lean-against surface for leaning against, and a rear surface situated opposite the lean-against surface. In this arrangement the rear surface comprises two indentations, with each of them designed to at least partially accommodate a knee of a further passenger seated behind the passenger.

In this arrangement the term "lean-against surface" can be used for the passenger seated on the passenger seat to lean against it, and the term "rear surface" can refer to the surface of the backrest, which surface faces away from this passenger, which facing-away surface is opposite the lean-against surface relative to a center plane through the backrest parallel to the lean-against surface and orthogonal to the seat surface or seat pan. In a seat arrangement comprising several seat rows arranged one behind the other, the rear surface can thus face the further passenger, who is seated behind the passenger.

In this arrangement the rear surface of the passenger seat can, at least in a sub-region, comprise two indentations, each of which is able to accommodate one knee of the passenger situated or seated behind the passenger. In this arrangement the term "sub-region" can refer to a lower region of the backrest, which region can be opposite the head end or the headrest region of the backrest (i.e. a region that can serve as a headrest for the passenger seated on the passenger seat) relative to a center plane through the backrest parallel to the seat surface and orthogonal to the lean-against surface. The sub-region of the backrest, which sub-region comprises the indentations, can thus adjoin the seat pan or the seat surface.

The further passenger can at least partly place a knee in each indentation. Furthermore, for example, in each case part of a lower leg and/or of a thigh of the passenger can at least partly be accommodated in an indentation. With the two indentations more legroom can be provided to the further passenger. Furthermore, seat rows can be arranged and attached in the passenger cabin at a smaller space between the individual seat rows. This in turn can make it possible, for example, to install one or several additional seat rows in the passenger cabin so that the space available in the passenger cabin can be used efficiently, and a greater number of passengers can be transported simultaneously than is possible in a passenger cabin comprising conventional passenger seats. This in turn can result in economic advantages, for example to an air carrier and/or an airline company.

Furthermore, the indentations in the backrest can entail savings in materials and, associated with it, a reduction in the cost of manufacture and/or a reduction in the weight of the passenger seat. This in turn can advantageously reduce fuel consumption.

Basically, the indentations in a cross section of the backrest along a plane through the indentations that can extend parallel to the seat surface or seat pan and orthogonal to the lean-against surface can, for example, be polygonal, semi-circular, rounded or shaped in any other manner.

In top view of the rear surface the indentations can manifest themselves as macroscopic recesses or hollows in the rear surface or in a surface of the backrest. In this arrangement the indentations can in top view at least in one sub-region of the indentations be, for example, oval, elliptical, circular, triangular, quadrangular, polygonal or of any other shape. A combination of several different geometric shapes relating to the design of the indentations is also possible.

According to one embodiment of the invention, the indentations of the rear surface are spaced apart from each other by at least 6 cm, for example at least 8 cm and in particular at least 10 cm, and in each case comprise a depth of at least 1 cm, for example at least 1.5 cm and in particular at least 2 cm.

The spacing or the space between the two indentations can, for example, be dimensioned between a first edge of a first indentation and a second edge of a second indentation, wherein the first edge and the second edge in relation to a center plane through the backrest orthogonal to the seat pan and orthogonal to the lean-against surface can be directly opposite and can designate the respective edge of the indentations, which edge can face away from a delimitation or an edge of the rear surface. In other words the space of the indentations can designate a space of the edges of the indentations in a central region or in the middle of the rear surface.

An adequately large space between the two indentations can advantageously improve comfort for the passenger whose knees can be accommodated in the indentations, because the space between the indentations can correspond to the average space of the knee of a passenger seated in a relaxed manner.

In this arrangement the individual indentations can comprise a width of at least 4 cm, for example at least 6 cm or at least 8 cm and in particular at least 10 cm, so that a knee can be comfortably accommodated in an indentation. The indentations can thus be macroscopic recesses in the rear surface.

The depth of the individual indentations can, for example, refer to a space of the deepest point within an indentation for delimiting or edging the rear surface and/or to the central region of the rear surface. Each indentation can thus, for example, accommodate a knee of the further passenger to the extent of the respective depth of the indentation. The further passenger can thus enjoy legroom increased by this depth, and/or a space between individual seat rows can, for example, be reduced by such an amount.

According to one embodiment of the invention, the indentations of the rear surface, at least in a sub-region of the rear surface between the seat pan and the center plane, are designed so as to be parallel to the seat surface and orthogonal to the lean-against surface. In this arrangement the center plane can extend through the middle or a center of the backrest. The indentations can thus be provided in a lower region of the backrest, which lower region can be situated opposite the headrest region of the backrest relative to the center plane. In this arrangement the lower region of the backrest can directly adjoin the seat surface or the seat pan.

According to one embodiment of the invention, the indentations are convex in shape and are spaced apart from each other by a concave central region. In this arrangement the central region of the rear surface can directly adjoin a center plane through the backrest orthogonally to the seat pan and orthogonally to the lean-against surface.

The convex indentations can thus be designed so as to be approximately complementary to an outside contour of a knee. In a cross section along a plane through the indentations parallel to the seat pan the rear surface and/or the backrest can have a wave-shaped profile that can be formed by the two convex indentations and the concave central region. Along this profile, thus an algebraic sign of a curvature or a direction of curvature of the surface along the plane can alter at least twice.

According to one embodiment of the invention, the rear surface above the center plane parallel to the seat surface and of a side opposite the seat surface relative to the center plane comprises a planar region, wherein in the planar region a folding table is arranged on the rear surface. In this arrangement the center plane can extend parallel to the seat surface or the seat pan and orthogonally to the lean-against surface. The surface of the rear surface can thus be of a planar and flat design above the middle of the backrest in the headrest region of the backrest. The planar region can predominantly, i.e. in a predominant sub-region in terms of area, be planar and flat. However, it is also possible for smaller structures in terms of area, for example an edge of the rear surface in the headrest region, to be of an uneven design. In the planar region, for example in a stowed position of the table, the table can thus rest essentially flat against the planar region, and in a folded-out position or an in-use position the table can project from the rear surface and can be used as a table. Thus in its stowed position the table can be attached in a space-saving manner to the backrest, and when required it can be folded out.

According to one embodiment of the invention, the passenger seat further comprises an adjustment device for adjusting an inclination angle between the seat pan and the backrest and a seat frame for attaching the seat pan and the backrest, wherein the seat frame comprises a first cross member and a second cross member that are arranged parallel to each other, parallel to the seat surface, and parallel to the lean-against surface of the backrest. In this arrangement the seat frame comprises at least one traverse that interconnects the first cross member and the second cross member, and the adjustment device comprises at least one joint for inclining and/or tilting the backrest relative to the seat pan.

In this arrangement the cross members can be profiles comprising, for example, round or angular cross sections or a cross section comprising any other shape.

The traverse can be designed to distribute forces acting on the passenger seat to the first and the second cross members. Furthermore, the traverse can be designed to hold the seat pan. In this arrangement the seat pan can also be detachably affixed to the at least one traverse.

By means of the adjustment device it is possible, by way of the joint, for example to incline the backrest in that the passenger leans back or leans forward, thus pushing the backrest backwards or moving the backrest into an upright position. By means of the adjustment device it is thus possible, for example, to increase or decrease the angle between the backrest and the seat pan. In addition or as an alternative, it is also possible to slide the seat pan on the seat frame to ensure comfortable seating.

According to one embodiment the seat frame can also comprise a single cross member that can, for example, comprise an elliptical, oval or rectangular cross-section profile. With an adequately sized cross section of the cross member the cross member itself can serve as a traverse, or at least one traverse for holding and/or attaching the seat pan can be arranged on the cross member so as to be detachably affixed.

According to one embodiment of the invention, the at least one traverse is detachably affixed to the cross members, wherein on the at least one traverse a seatbelt is attached that is to be worn by the passenger.

The at least one traverse can be detachably affixed to the cross members by means of a clamping device or a screw connection. In this manner the traverse can easily be detached from the cross members in order, for example, in a longitudinal direction of the cross members to be slid into some other position on the cross members. Moreover, the traverse can be completely detached and removed from the cross members. This in turn can have an advantageous effect on the flexibility of a seat arrangement because, for example, a passenger seat can be removed from a row, for example in order to provide space for further components such as, for example, a door frame, a service table, or other interior components of the aircraft.

The seatbelt can be designed for the passenger to be detachably attached to the passenger seat, wherein any acceleration forces acting on the passenger can be transferred to the seat frame by way of the seatbelt. In this arrangement the seatbelt can be attached at least indirectly to the traverse or to one of the cross members by means of an attachment device.

According to one embodiment of the invention, the backrest is designed as a self-supporting back shell and is attached at least indirectly to the at least one joint of the adjustment device.

A self-supporting or structurally supporting backrest can be advantageous in particular in terms of weight reduction of the passenger seat because further components for the backrest, for example a frame, can be dispensed with. A reduced number of components or individual parts of the passenger seat can in turn have an advantageous effect on manufacturing costs and/or maintenance work relating to the passenger seat.

The self-supporting or structurally supporting backrest can be attached to the joint, for example directly or by way of an attachment device, so that forces acting on the backrest can be channeled out directly, by way of the backrest, into the seat frame with the cross members and the traverse. In other words the backrest itself can provide a load path for channeling forces from the backrest and into the seat frame.

According to one embodiment of the invention, the seat frame comprises two traverses that extend from the first cross member in the direction of the at least one joint of the adjustment device, wherein a spar is arranged on the joint, which spar is arranged orthogonally to the cross members, and to which spar the backrest is attached.

In other words a spar can be arranged on the joint, which spar can, at least indirectly, be attached to at least one of the cross members and can project from said cross member. The spar can be designed to carry the backrest and to channel forces that act on the backrest into the seat frame with the cross members and the traverses.

According to one embodiment of the invention, the backrest is attached to the spar in the middle, for example on a central region of the backrest, wherein the spar provides a load path for channeling out a force acting on the backrest. The spar can, in particular, provide a single load path for channeling out the forces acting on the backrest. Furthermore, in a region of the seat pan the spar can be curved and can serve as a traverse for the seat frame, wherein the seat pan can be held on and/or attached to the traverse or the spar in the middle. Optionally, at least one further traverse, in particular two further traverses, can be provided for the lateral holding and/or attachment of the seat pan on the seat frame.

Furthermore, optionally an adjustment device for inclining the backrest relative to the seat pan can be provided, wherein the adjustment device can comprise a joint that can be arranged on the spar, for example, in a region of the spar between the seat pan and the backrest.

The central region in which the backrest can be attached to the spar can, for example, designate a region on a center plane through the backrest, which center plane can extend orthogonally to the lean-against surface and orthogonally to the seat surface or seat pan.

According to one embodiment of the invention, the backrest is made from a material selected from the group comprising plastic, aluminum, and carbon fiber reinforced plastic (CFRP).

In this arrangement, in particular, a core of the backrest can comprise plastic, aluminum, or CFRP. A combination of various such materials is also imaginable. In particular, in the region of the lean-against surface, for the purpose of cushioning said lean-against surface, the core can comprise a back cushion and can be covered with further materials such as, for example, fabric material and/or leather material.

Manufacturing the backrest with one of the above-mentioned materials can make it possible to provide a lightweight and robust passenger seat. This can advantageously reduce the weight of the passenger seat, which can, in particular, result in savings relating to reduced fuel consumption of the aircraft.

Furthermore, the passenger seat according to one embodiment can comprise a seat cushion that can be arranged on the side of the seat pan, which side is opposite the cross members, and that is designed to cushion the seat surface. Furthermore, the passenger seat can comprise at least one armrest for supporting an arm of the passenger.

A further aspect of the invention relates to an aircraft comprising a passenger cabin and a passenger seat as described above and below.

Below, exemplary embodiments of the invention are described in detail with reference to the enclosed figures.

### Brief description of the figures

Fig. 1A diagrammatically shows a perspective view of a passenger seat according to one embodiment.
Fig. 1B diagrammatically shows a perspective view of a seat arrangement comprising several passenger seats according to Fig. 1A according to one embodiment.
Fig. 2 diagrammatically shows a perspective view of a passenger seat according to one embodiment of the invention.
Fig. 3A diagrammatically shows a top view of a seat arrangement comprising passenger seats according to one embodiment of the invention.
Fig. 3B diagrammatically shows a lateral view of the seat arrangement of Fig. 3A.
Fig. 3C diagrammatically shows a section of the seat arrangement of Fig. 3B.
Fig. 4A diagrammatically shows a section of a seat arrangement comprising passenger seats according to one embodiment of the invention.
Fig. 4B diagrammatically shows a section of a seat arrangement comprising passenger seats according to a further embodiment of the invention.
Fig. 5A diagrammatically shows a perspective view of a passenger seat according to one embodiment of the invention.
Fig. 5B diagrammatically shows a top view of the passenger seat of Fig. 5A.
Fig. 5C diagrammatically shows a lateral view of the passenger seat of Fig. 5A.
Fig. 5D diagrammatically shows a spar for the passenger seat of Fig. 5A according to one embodiment of the invention.
Fig. 6A diagrammatically shows a further passenger seat according to one embodiment of the invention.
Fig. 6B diagrammatically shows a detailed view of an adjustment device of the passenger seat of Fig. 6A.
Fig. 6C diagrammatically shows a further passenger seat according to one embodiment of the invention.
Fig. 6D diagrammatically shows a further passenger seat according to one embodiment of the invention.
Fig. 7 diagrammatically shows a top view of a passenger seat according to one embodiment of the invention.
Fig. 8 diagrammatically shows an aircraft with passenger seats according to one embodiment of the invention.

### Detailed description of exemplary embodiments

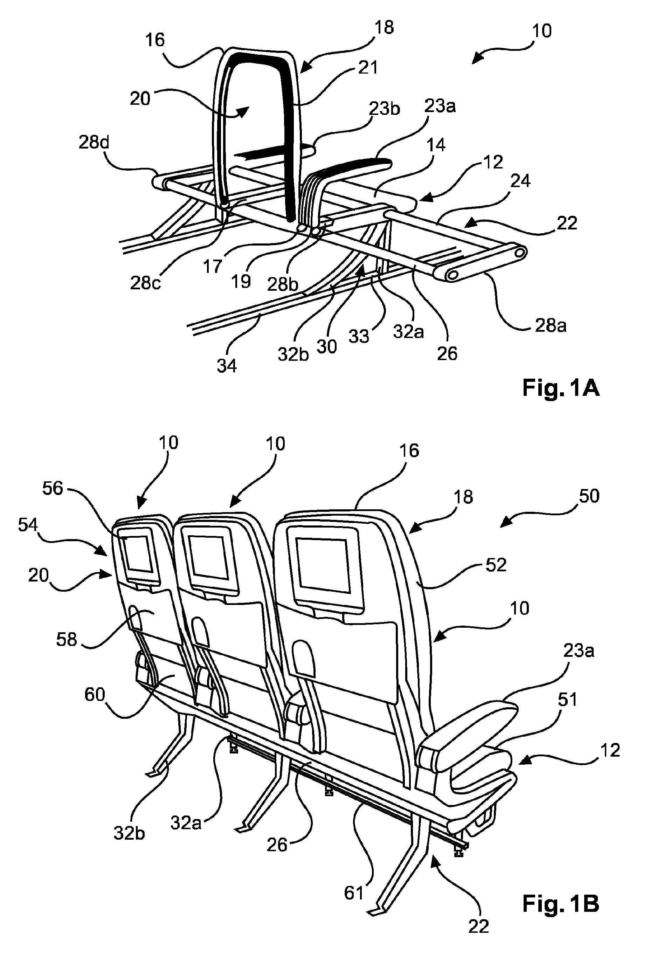

Fig. 1A diagrammatically shows a perspective view of a passenger seat 10 according to one embodiment, as it can, for example, be installed in an aircraft.

The passenger seat 10 comprises a seat pan 12 that provides a seat surface 14 for a passenger. The seat pan 12 can, for example, be a shell made of plastic, CFRP or aluminum, and can be cushioned by means of a seat cushion, which in turn can comprise a cover, for example made of a fabric material and/or leather material.

Furthermore, the passenger seat 10 comprises a backrest 16 with a lean-against surface 18 and a rear surface 20 that is situated opposite the lean-against surface 18. The backrest 16 further comprises a frame 21 designed in the form of an inverted "U". The lean-against surface 18 can, furthermore, be cushioned by a back cushion, and the backrest 16 can be covered by a cover, for example, of a fabric material and/or leather material.

Furthermore, the passenger seat 10 comprises a first armrest 23a and a second armrest 23b for supporting the arms of a passenger.

The passenger seat 10 further comprises a seat frame 22 that comprises a first or front cross member 24 and a second or rear cross member 26. The first cross member 24 and the second cross member 26 are interconnected by way of four traverses 28a, 28b, 28c, 28d. The cross members 24, 26 can, for example, be designed as transverse profiles, for example round profiles or rectangular profiles, and can, for example, be made of aluminum. The cross members 24, 26 can thus be designed as simple tubes, for example with a round or a rectangular cross section.

The seat pan 12 is attached to the traverses 28b and 28c or is accommodated between the two traverses 28b, 28c and is held thereon. Furthermore, by way of a shaft 17, the backrest 16 is connected in a lower region of the backrest 16 to the two traverses 28b and 28c. In this arrangement the shaft 17 is rotatably adjustable towards the rear so that the inclination angle between the backrest 16 and the seat pan 12 can be varied, for example for the purpose of the passenger seated in the passenger seat 10 reclining. In this entire description the direction "towards the rear" can denote a rearwards direction of the passenger seated in the passenger seat 10. Analogously, the direction "towards the front" can denote the direction opposite to the rearwards direction, thus denoting the direction of view of the passenger seated in the passenger seat 10.

In a region in which the shaft 17 is accommodated by the traverses 28b and 28c, furthermore an anchoring device 19 for anchoring a seatbelt can be arranged. The anchoring device 19 can, for example, be attached to one of the traverses 28b, 28c and/or to the second or rear cross member 26.

Furthermore, the seat frame 22 comprises a leg arrangement 30 comprising a first leg 32a and a second leg 32b. The first leg 32a can also be referred to as a front leg or front foot, and the second leg 32b can be referred to as a rear leg or rear foot. In this design the leg arrangement 30 can be attached to the first cross member 24 and/or to the second cross member 26, and/or to one of the traverses 28a, 28b, 28c, 28d. In this design the second leg 32b is arranged at an angle relative to the first leg 32a.

On a side of the leg arrangement 30, which side is opposite the seat pan 12, the first leg 32a and the second leg 32b can be connected by means of a connecting piece 33. The connecting piece 33 and ends of the first leg 32a and of the second leg 32b, which ends are connected thereto, can, furthermore, be attached to a seat rail 34 of the aircraft.

Fig. 1B diagrammatically shows a perspective view of a seat arrangement 50 comprising three passenger seats 10 arranged side by side on a seat frame 22. Unless otherwise described, the passenger seats 10 of Fig. 1B can comprise the same characteristics and elements as the passenger seat 10 described in Fig. 1A.

The passenger seats 10 of Fig. 1B comprise a seat cushion 51 attached to the seat pan 12, and the backrest 16 comprises a back cushion 52 attached to the lean-against surface 18.

Furthermore, on the rear surface 20 of the passenger seats 10 in a headrest region 54 of the backrest 16 in each case an operating element 56 is arranged. The operating element 56 can, for example, be a multifunction monitor that can be used for entertainment and for the provision of information, for example information relating to a flight route, for further passengers seated behind the seat arrangement 50.

Furthermore, on the rear surface 20 of the passenger seats 10 in the headrest region 54 of the backrest 16 in each case a folding table 58 is arranged. The folding tables 58 are in each case shown in a stowed position in which in their folded-in position they rest in each case against the rear surface 20. The folding tables 58 can be folded out and moved into the folded-out position or in-use position by passengers seated further behind the seat arrangement 50, in which folded-out position or in-use position they can project from the rear surface in order to be used as actual tables 58.

On a side of the backrest 16, which side is situated opposite the headrest region 54 in relation to a center plane that extends parallel to the seat surface 14 and orthogonally to the lean-against surface 18 or backrest 16, a stowage compartment 60 is arranged that can, for example, be used for holding magazines and newspapers.

The seat arrangement 50 shown in Fig. 1B further comprises a seat frame 22, wherein at least the second or rear cross member 26 is designed as a rectangular profile. The first and the second cross members 24, 26 can, however, also comprise any other cross-section profile, for example, a round, an elliptical, or an oval profile. In the seat frame 22 of the seat arrangement 50 the first leg 32a or the front leg 32a of each passenger seat 10 is attached to the first cross member 24 (not shown), and the second leg 32b or rear leg 32b of each passenger seat 10 is attached to the second cross member 26. Overall, the seat arrangement 50 of Fig. 1B comprises three first legs 32a and three second legs 32b, wherein the three first legs 32a are interconnected and stiffened by means of a cross brace 61 to provide additional stability. The seat frame 22 can, however, comprise only two first legs 32a and two second legs 32b.

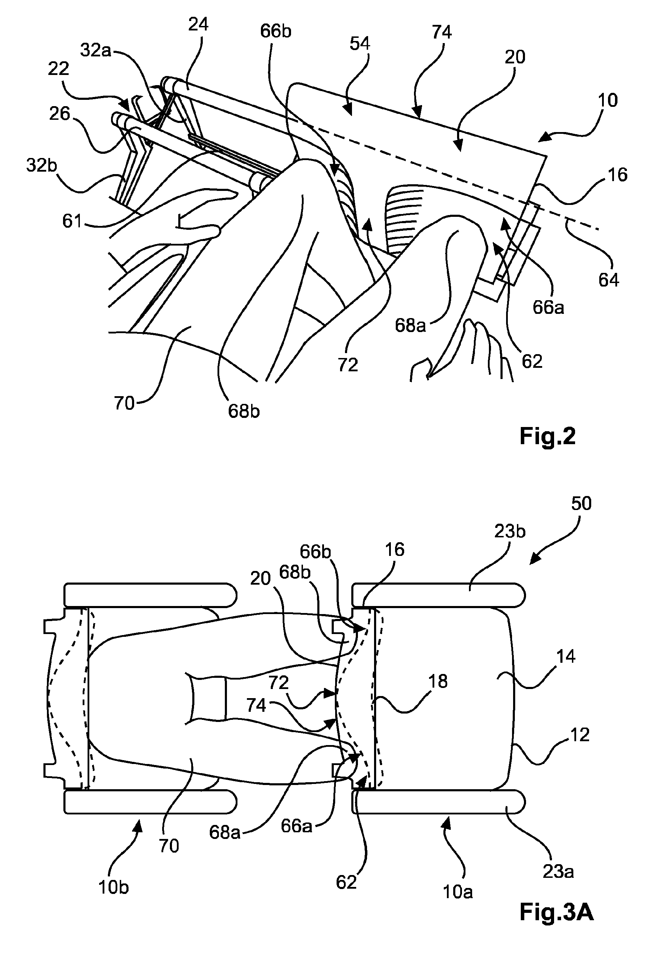

Fig. 2 diagrammatically shows a perspective view of a passenger seat 10 according to one embodiment of the invention. Unless otherwise described, the passenger seat 10 of Fig. 2 can comprise the same characteristics and elements as the passenger seats 10 of Figures 1A and 1B.

The passenger seat 10 of Fig. 2 comprises a seat pan 12 for providing a seat surface 14 that is arranged on a seat frame 22 with a first cross member 24 and a second cross member 26.

Furthermore, the passenger seat 10 comprises a backrest 16 with a lean-against surface 18 and a rear surface 20 that is situated opposite the lean-against surface 18. The rear surface 20 and the lean-against surface 18 can, for example, relative to a center plane, be situated parallel to the rear surface 20, parallel to the lean-against surface 18 and orthogonally to the seat surface 14.

Overall, the backrest 16 can be designed as a self-supporting backrest 16 that can be attached directly or indirectly to an attachment device on the seat frame 22, wherein the passenger seat 10 can also comprise an adjustment device for adjusting an angle between the backrest 16 and the seat pan 12. The backrest 16 can, for example, be designed as a back shell, for example comprising plastic, aluminum, or a carbon fiber reinforced plastic, and can be cushioned with a back cushion, and/or can comprise a cover. The backrest 16 can, however, also be attached to a spar, which, for example, can project orthogonally from the second cross member 26.

In a sub-region 62 of the rear surface 20 between the seat pan 12 and a center plane 64 (shown as a dashed line in Fig. 2) that extends parallel to the seat pan 12 and orthogonally to the backrest 16 the rear surface 20 comprises two indentations 66a and 66b that are designed in each case to accommodate, at least in part, a knee 68a, 68b of a passenger 70 seated behind the passenger seat 10. Likewise, in the indentations 66a, 66b in each case part of a thigh and/or of a lower leg of the passenger 70 can be accommodated.

The indentations 66a and 66b shown in Fig. 2 are designed as convex hollows or recesses and are spaced apart from each other or separated by a concave central region 72 so that the backrest 16 in the sub-region 62 comprises a wave-shaped surface. A curvature of the surface in the sub-region 72 thus changes the algebraic sign at least twice along a direction parallel to the center plane 64.

In this arrangement the central region 72 can comprise a width of at least 6 cm, for example at least 8 cm and in particular at least 10 cm. The two indentations 66a and 66b can thus be spaced apart from each other by the width of the central region 72.

Furthermore, the indentations 66a and 66b can comprise a depth of at least 1 cm, for example at least 1.5 cm and in particular 2 cm.

The two indentations 66a, 66b can, for example, comprise a hook-shaped contour. In this design the contour of each indentation 66a, 66b can be defined as an isoline of the respective indentation 66a, 66b, wherein an isoline can be a line along a surface of one of the indentations 66a, 66b along which a space between the isoline and a lowest point of the respective indentation 66a, 66b (or a space between the isoline and a highest point of the concave central region 72) can be constant. That isoline of each indentation 66a, 66b that is spaced apart furthest from the deepest point of the respective indentation 66a, 66b (or that is spaced apart least far from the highest point of the central region 72) can designate an outside contour of the respective indentation 66a, 66b.

The outside contour of each indentation 66a, 66b can, as shown in Fig. 2, for example be hook-shaped with a straight-line first section in the region of a bottom edge of the backrest or in the region of the seat pan 12 can comprise an arched or curved second section in the region of the center plane 64 and a straight-line third section in the region of the center plane 64. In this design the first section can extend orthogonally, and the third section can extend parallel to the center plane 64. The contour can, however, also, for example, comprise an oval, elliptical, circular, polygonal or any other design.

Furthermore, above the center plane 64 the backrest 16 comprises a planar region 74 that is arranged on a side of the backrest 16, which side is opposite the seat pan 12 or the seat surface 14 relative to the center plane 64. In this design the planar region 74 can comprise the headrest region 54 and, for example, can be used for resting the head and/or the shoulder region of a passenger seated in the passenger seat 10. In the planar region 74 the rear surface 20 of the backrest 16 is designed so as to be essentially flat and planar so that, for example, a folding table analogous to the folding tables 58 of Fig. 1B can be arranged in this region, and in a stowed position can rest flat against the planar region 74. Furthermore, analogous to the passenger seats 10 of Fig. 1B, an operating element 56 can be arranged in the planar region 74.

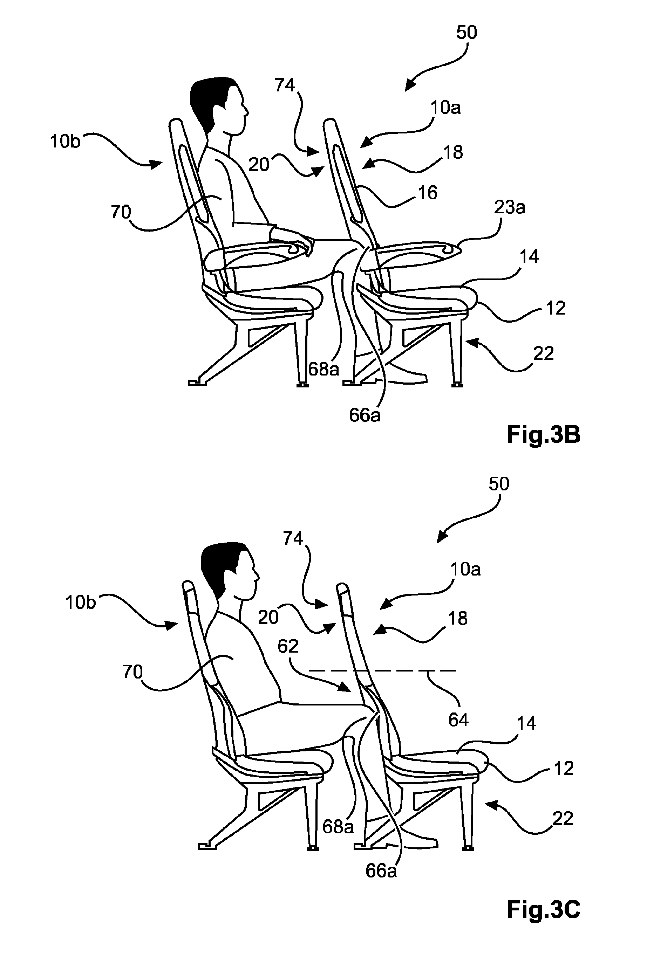

Fig. 3A shows a top view of a seat arrangement 50 comprising a further passenger seat 10b arranged behind a passenger seat 10a. Unless otherwise described, the passenger seats 10a and 10b of Fig. 3 can comprise the same characteristics and elements as the passenger seats 10 of Figures 1A, 1B and 2.

The backrest 16 of the passenger seat 10a comprises a rear surface 20 which again in a sub-region 62 underneath a center plane that extends parallel to the seat surface 14 and orthogonally to the rear surface 20 comprises two indentations 66a, 66b that are designed in each case to accommodate a knee 68a, 68b of a passenger 70 seated behind the passenger seat 10a in the passenger seat 10b. In the passenger seats 10a and 10b shown in Fig. 3, too, the indentations 66a, 66b are of a convex design and are spaced apart from a central region 72 that is concave in design, so that the rear surface 20 in the sub-region 62 comprises a wave-shaped surface. In this design the wave-shaped surface comprises a wave crest that is formed by the concave central region 72, which wave crest is laterally in each case adjoined by a wave trough, wherein the wave troughs are formed by the two indentations 66a, 66b.

On a side of the backrest 16, which side is opposite the sub-region 62 relative to the center plane, the rear surface 20 comprises an essentially planar region 74 on which, for example, a folding table 58 and/or an operating element 56 can be arranged.

Fig. 3B diagrammatically shows a lateral view of the seat arrangement 50 of Fig. 3A.

Fig. 3B clearly shows how the knee 68a of the passenger 70 seated behind the passenger seat 10a is accommodated in the indentation 66a of the backrest 16. Likewise, part of a lower leg of the passenger 70 is accommodated in the indentation 66a so that when compared to conventional passenger seats a space between the passenger seats 10a and 10b can be reduced and/or so that the passenger 70 enjoys more legroom.

Fig. 3C diagrammatically shows a section of the seat arrangement 50 of Fig. 3B. In this design the section extends along a plane orthogonally to the backrest 16 and orthogonally to the seat pan 12 through the indentation 66a.

The section of Fig. 3C clearly shows how the knee 68a of the passenger 70 and part of the lower leg are accommodated in the indentation 66a of the sub-region 62 of the rear surface 20 of the backrest 16.

Fig. 3C also clearly shows the planar region 74 that is opposite the sub-region 62 relative to the center plane 64 that extends parallel to the seat surface 14 and orthogonally to the backrest 16.

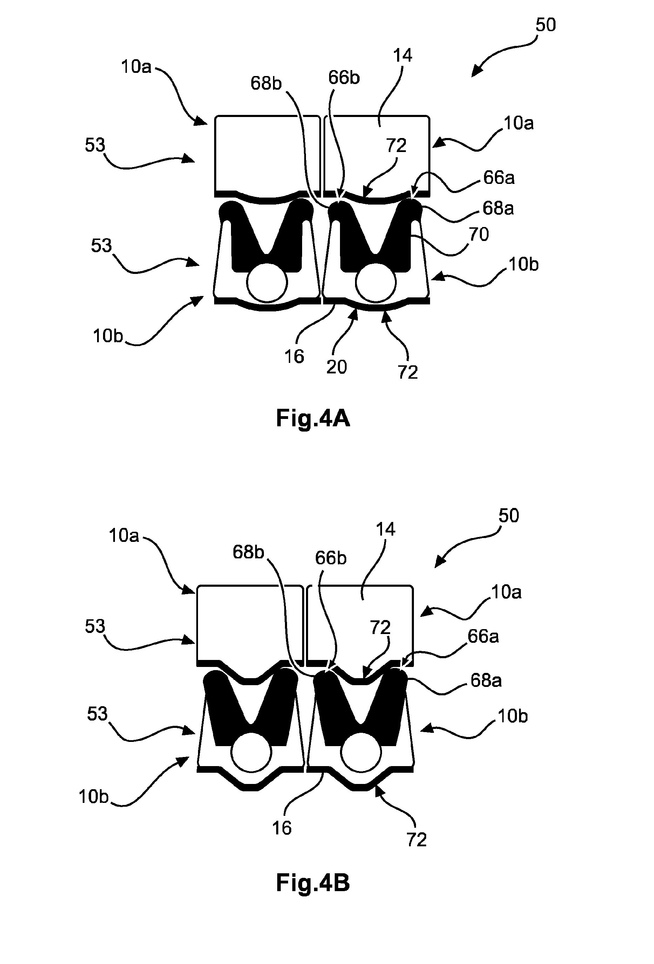

Fig. 4A diagrammatically shows a section of a seat arrangement 50 comprising two seat rows 53 in which in each case two passenger seats 10a and 10b are arranged side by side. In this design the section shown in Fig. 4A extends along a plane parallel to the seat surface 14 at the height of the indentations 66a, 66b in the respective backrests 16. Unless otherwise described, the passenger seats 10a, 10b of Fig. 4A can comprise the same characteristics and elements as the passenger seats of Figures 1A to 3C.

The section view of Fig. 4A clearly shows the wave-shaped contour in the sub-region 62 of the rear surface 20, which contour comprises a wave crest formed by the concave central region 72, and laterally adjoining wave troughs that are formed by the convex indentations 66a and 66b.

Fig. 4B diagrammatically shows a section of a seat arrangement 50 comprising two seat rows 53 in which in each case two passenger seats 10a and 10b are arranged side by side. In this design the section shown in Fig. 4B extends along the same plane as the section in Fig. 4A.

Unless otherwise described, the passenger seats 10a, 10b of Fig. 4B can comprise the same characteristics and elements as the passenger seats of Figures 1A to 4A.

In contrast to the wave-shaped contour, shown in Fig. 4A, of the rear surface 20 in the sub-region 62, the rear surface 20 in the sub-region 62 of the backrest 16 extends in a polygon-like manner so that in this embodiment also two indentations 66a and 66b are provided in each backrest 16, which indentations 66a and 66b are designed to each accommodate a knee 68a, 68b of a passenger 70 seated behind.

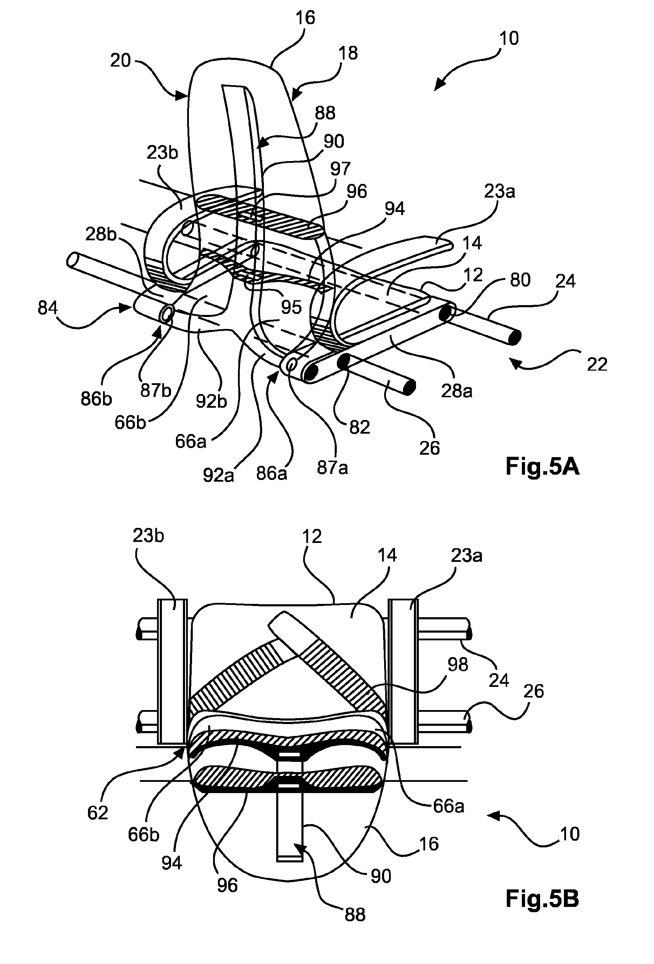

Fig. 5A diagrammatically shows a perspective view of a passenger seat 10 according to one embodiment. Unless otherwise described, the passenger seat 10 of Fig. 5A can comprise the same characteristics and elements as the passenger seats of the preceding Figures 1A to 4B.

The passenger seat 10 comprises a seat frame 22 with a first or front cross member 24 and a second or rear cross member 26, which cross members 24, 26 are arranged parallel to each other and are interconnected by way of a first traverse 28a and a second traverse 28b. In this design the two traverses 28a, 28b extend parallel to each other and orthogonally to the two cross members 24, 26. To this effect the traverses 28a, 28b comprise a first channel 80 for accommodating the first cross member 24, and a channel 82 for accommodating the second cross member 26.

The channels 80, 82 can comprise an attachment device for detachably affixing the traverses 28a, 28b on the cross members 24, 26. The attachment device can, for example, comprise a clamping device by means of which the traverses 28a, 28b can be detachably affixed on the cross members 24, 26. The attachment device and/or the clamping device can, for example, comprise a screw connection for affixing the traverses 28a, 28b.

On the traverse 28a an armrest 23a for an arm of a passenger 70 seated in the passenger seat 10 is attached, and on the traverse 28b a further armrest 23b for a further arm of the passenger 70 is attached.

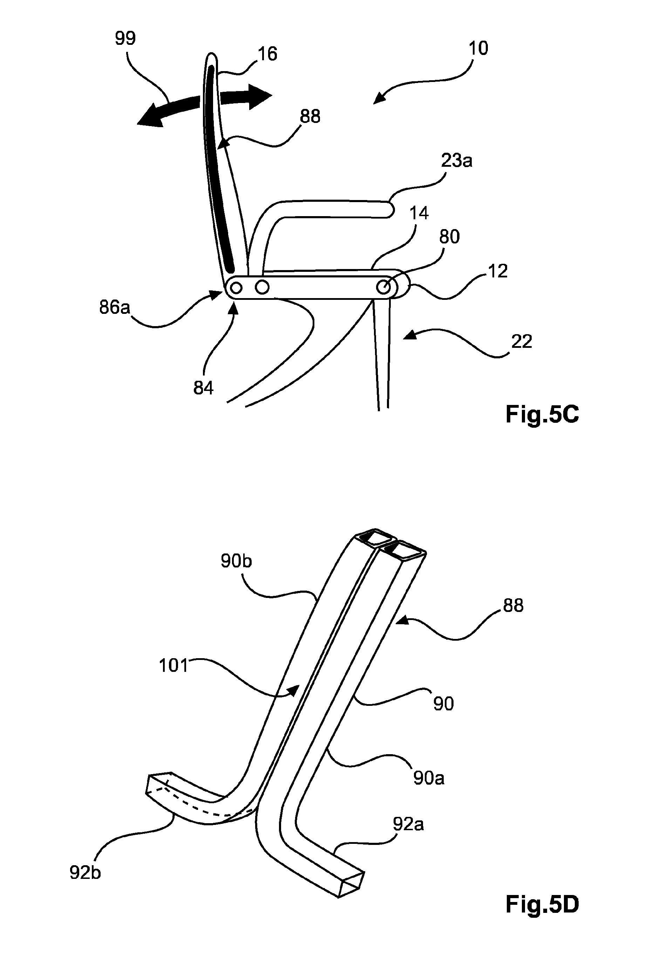

The passenger seat 10 of Fig. 5A further comprises an adjustment device 84 for adjusting the inclination angle between the backrest 16 and the seat pan 12. To this effect the adjustment device 84 comprises a first joint 86a that is rotatably held by means of a first bearing 87a and is connected to the first traverse 28a. Furthermore, the adjustment device 84 comprises a second joint 86b that is rotatably held by means of a second bearing 87b and is connected to the second traverse 28b. By way of the joints 86a, 86b with the respective bearings 87a, 87b the backrest 16 can be tilted relative to the seat pan 12 or to the seat surface 14 so that the passenger 70 can, for example, recline further back than in an upright seating position as shown in Fig. 5C.

On the two joints 86a, 86b a spar 88 is attached that is arranged orthogonally to the first cross member 24 and orthogonally to the second cross member 26.

To this effect the spar 88 comprises a support member 90 on which the backrest 16 is attached in the middle. Approximately at the height of the traverses 28a, 28b the support member 90 branches into a first branch 92a, which extends to the first joint 86a, and into a second branch 92b, which extends to the second joint 86b. The spar 88 thus has the profile of an inverted "T" that on the respective ends of the branches 92a, 92b in each is attached to the corresponding joints 86a, 86b of the adjustment device 84 so as to be rotatably held. The spar 88 thus provides a load path for channeling out and into the seat frame 22 the forces acting on the backrest 16.

The branches 92a, 92b can, for example, project in arc shape from the support member 90 thus at least partly determining the gradient or contour of the indentations 66a, 66b of the backrest.

For the purpose of affixing the backrest 16 to the spar 88, for example feed-through elements 96, 94 can be arranged in the backrest 16, which feed-through elements 96, 94 in each case comprise a feed-through device 95, 97. In the feed-through devices 95, 97 the spar 88 or the support member 90 can be accommodated so that the backrest can be affixed to the spar 88. Furthermore, the backrest 16 can be attached to the spar 88 by means of an attachment device that can, for example, comprise a clamping connection and/or screw connection.

Fig. 5B shows a top view of the passenger seat 10 of Fig. 5A. The top view clearly shows how the backrest 16 because of its advantageous design in a lower sub-region 62 provides two indentations 66a, 66b in each case for accommodating a knee of a passenger 70 seated behind the passenger seat 10.

The passenger seat 10 of Fig. 5A further comprises a seatbelt 98 to be worn by a passenger. In each case one end of the seatbelt 98 is anchored on one of the traverses 28a, 28b, wherein as an alternative or in addition the seatbelt 98 can be anchored on the second cross member 26. By way of the seatbelt 98 it is thus possible to channel potentially acting forces into the traverses 28a, 28b and into the seat frame 22.

Fig. 5C shows a lateral view of the passenger seat 10 of Fig. 5A. By means of the arrows 99 it is indicated in Fig. 5C how with the use of the adjustment device 84 with the joints 86a, 86b an inclination angle between the backrest 16 and the seat surface 14 can be adjusted.

Fig. 5D shows a spar 88 for the passenger seat 10 of Fig. 5A according to one embodiment. The spar 88 comprises two rectangular profiles 90a and 90b which in a sub-region 101 rest flat against each other, thus providing or forming the support member 90. In the sub-region 101 the rectangular profiles 90a and 90b can be interconnected, for example bonded, welded, screwed or riveted, flat against each other. The spar 88 can also be designed integrally or in a single piece. For example, the spar 88 can be manufactured with the use of a 3D printing method, for example an additive layer manufacturing (ALM) method. Adjoining the sub-region 101 the rectangular areas 90a, 90b are curved so that in each case they project from the sub-region 101, encompass an angle of 180°, and provide or form the branches 92a and 92b for the bearing and/or attachment of the spar 88 on/to the seat frame 22.

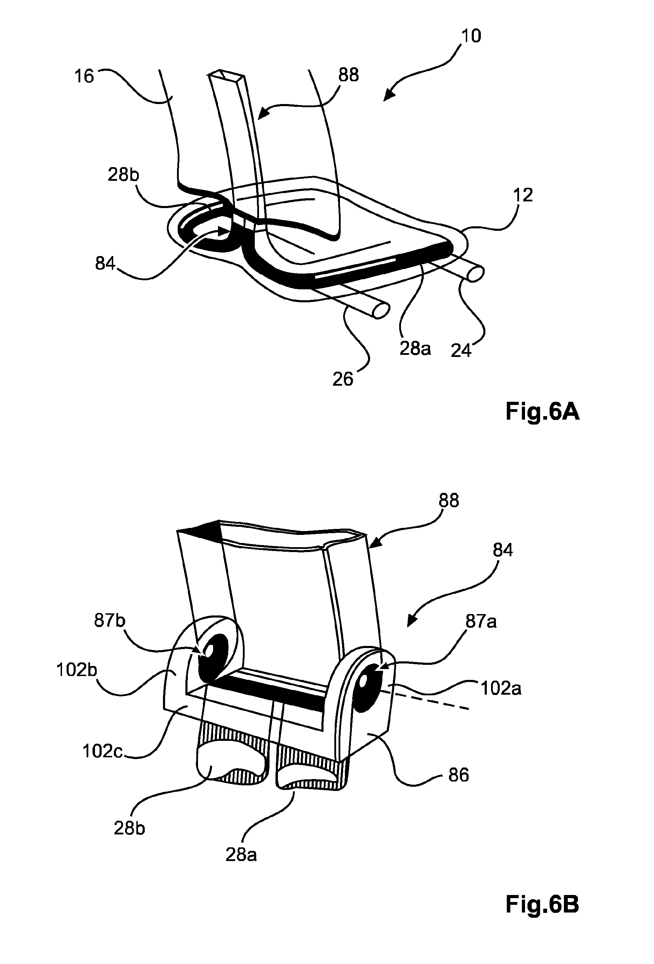

Fig. 6A shows a further passenger seat 10 according to one embodiment. Unless otherwise described, the passenger seat 10 of Fig. 6A can comprise the same characteristics and elements as the passenger seats of the preceding Figures 1A to 5D.

In the passenger seat 10 shown in Fig. 6A the seat pan 12 is laterally held on two traverses 28a, 28b. The two traverses 28a, 28b are bent at right angles and extend from the first cross member 24 to the second cross member 26. Approximately in the region of the second cross member 26 the two traverses 28a, 28b are curved and extend in the direction of a center plane of the passenger seat 10, which center plane extends orthogonally to the seat pan 12 and orthogonally to the backrest 16. In a region around the center plane the traverses 28a, 28b are designed to curve upwards in the direction of the backrest 16 and are attached to the adjustment device 84, to which the spar 88 with the backrest 16 is also attached.

Fig. 6B shows a detailed view of an adjustment device 84 of the passenger seat 10 of Fig. 6A. In each case one end of the two traverses 28a, 28b can be attached, for example bonded, welded, screwed or riveted, to a joint 86 of the adjustment device 84. The joint 86 and the two traverses 28a, 28b can also be designed integrally or in a single piece, for example with the use of a 3D printing method, for example an additive layer manufacturing (ALM) method. In this design the joint 86 is U-shaped and comprises a first limb 102a and a second limb 102b, wherein the traverses 28a, 28b are attached to a cross limb 102c that connects the first and second limbs 102a, 102b.

The first limb 102a provides a first bearing 87a, and the second limb 102b provides a second bearing 87b, wherein in each case the sides of the spar 88 are accommodated in the first and in the second bearings 87a, 87b, with the spar 88 being rotatably held. To this effect the spar 88 can, for example, be attached to the bearings 87a, 87b with the use of an attachment means, for example, with the use of a press-fit connection or of a screw connection.

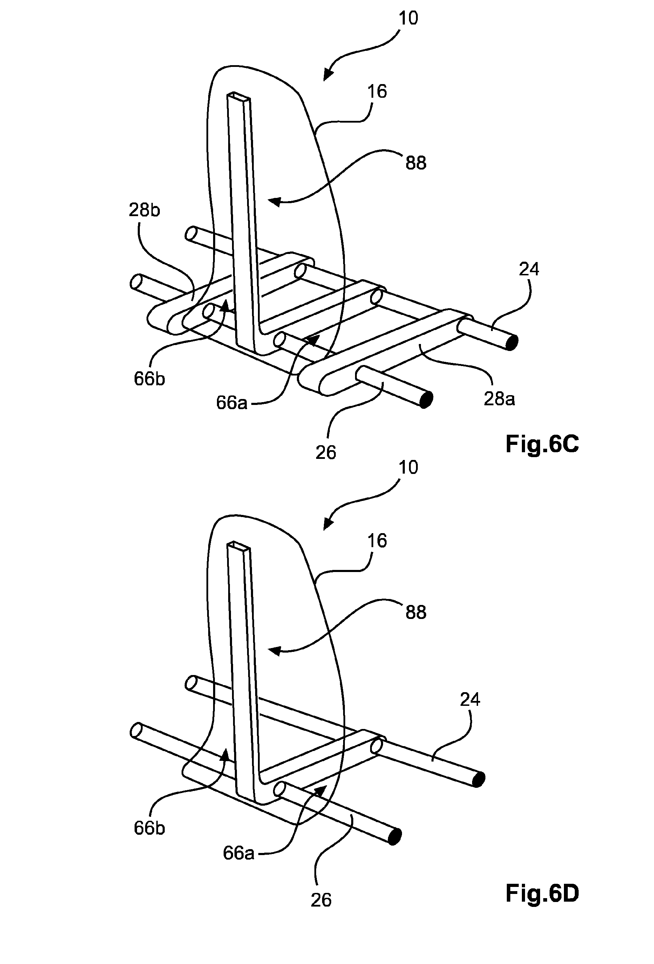

Fig. 6C shows a further passenger seat 10 according to one embodiment. Analogous to the embodiment shown in Fig. 6A, in the passenger seat 10 of Fig. 6C, too, the backrest 16 is attached to the spar 88 in the middle. Unless otherwise described, the passenger seat 10 of Fig. 6C can comprise the same characteristics and elements as the passenger seats 10 of the preceding figures.

In a region of a bottom edge the backrest 16 or in a region of the seat pan 12 the spar 88 is curved or and/or bent at right angles and interconnects the first and the second cross members 24, 26. The spar 88 can thus also serve as a traverse, wherein the seat pan 12 can, for example, be held on and/or attached to the spar 88 in the middle.

The passenger seat 10 of Fig. 6C further comprises two further traverses 28a, 28b on/to which the seat pan 12 can be laterally held and/or attached. The lateral traverses 28a, 28b can also be bent at right angles and/or curved as shown in Fig. 6A.

Optionally an adjustment device 84 with a joint 86 for inclining the backrest 16 can be arranged on the spar 88, wherein the joint 86 can, for example, be arranged in the curved region of the spar 88.

Fig. 6D diagrammatically shows a further passenger seat 10 according to one embodiment of the invention. Unless otherwise described, the passenger seat 10 of Fig. 6D can comprise the same characteristics and elements as the passenger seats 10 of the preceding figures.

Analogous to the embodiments shown in Figs 6A and 6C, in the passenger seat 10 of Fig. 6D, too, the backrest 16 is attached in the middle to a spar 88, wherein the spar 88 in a region of a bottom edge of the backrest 16 or in a region of the seat pan 12 is curved and/or bent at right angles and interconnects the first and the second cross members 24, 26 so the spar 88 of Fig. 6D, too, can serve as a traverse for holding and attaching the seat pan 12. The seat pan 12 can, for example, be held on and/or attached to the spar 88 in the middle.

In contrast to the passenger seat 10 of Fig. 6C the passenger seat 10 of Fig. 6D does not comprise any traverses 28a, 28b for laterally holding and/or attaching the seat pan 12, i.e. the seat pan 12 can be held exclusively on the spar 88 and thus can be attached exclusively to the seat frame 22. The spar 88 can thus serve as a mono-traverse for holding and/or attaching the seat pan 12.

Optionally an adjustment device 84 with a joint 86 for inclining the backrest 16 can be arranged on the spar 88, wherein the joint 86 can, for example, be arranged in the curved region of the spar 88.

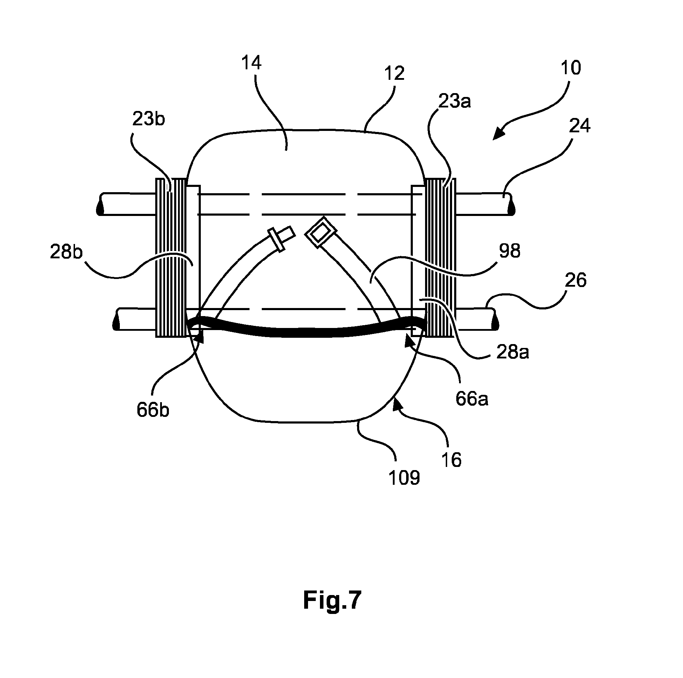

Fig. 7 shows a top view of a passenger seat 10 according to one embodiment, in which the backrest 16 is designed as a self-supporting or structurally supporting back shell 109. The back shell 109 can, for example, be manufactured with the use of a 3D printing method, for example an additive layer manufacturing (ALM) method. Furthermore, the back shell 109 can, for example, be formed from plastic, aluminum or carbon fiber reinforced plastic so that advantageously the indentations 66a, 66b can be formed easily and economically.

Optionally, the back shell 109 can be attached to a suitable adjustment device 84 which in turn can be connected, for example to the second cross member and/or at least one of the traverses 28a, 28b.

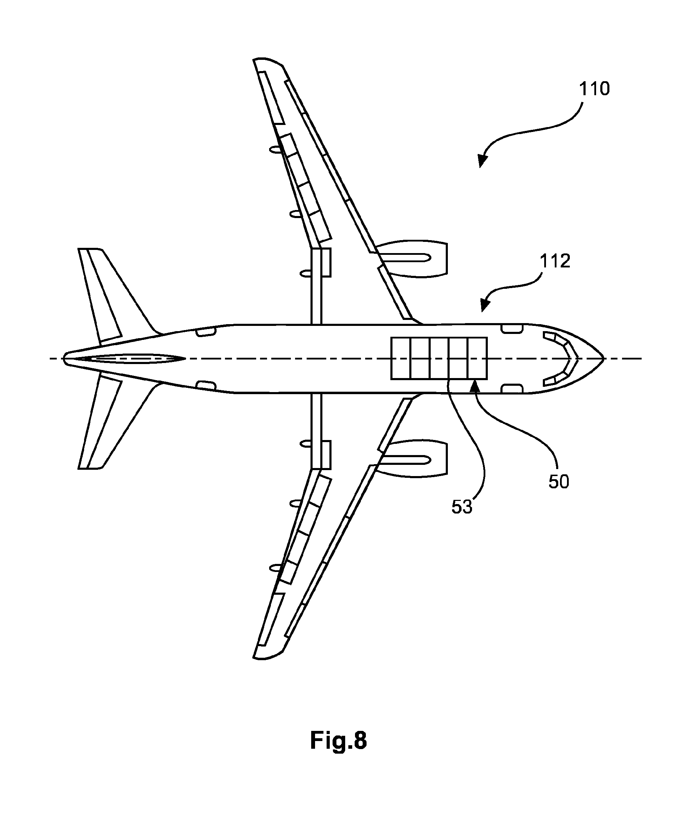

Fig. 8 shows an aircraft 110 with passenger seats 10 according to one embodiment. The passenger seats 10 can, for example, be arranged in a seat arrangement 50 comprising several rows 53 one behind the other, which rows 53 can in each case comprise several passenger seats 10 side by side, in a passenger cabin 112 of the aircraft 110.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics of other exemplary embodiments described above. Reference characters in the claims are not to be interpreted as limitations.

## Claims

1. A passenger seat (10) for an aircraft (110), the passenger seat (10) comprising:
a seat pan (12) for providing a seat surface (14) for a passenger;
a backrest (16) with a lean-against surface (18) for leaning against, and a rear surface (20) situated opposite the lean-against surface (18);
wherein the rear surface (20) comprises two indentations (66a, 66b), with each of them configured to at least partially accommodate a knee (68a, 68b) of a further passenger (70) seated behind the passenger.

2. The passenger seat (10) of claim 1,
wherein the indentations (66a, 66b) of the rear surface (20) are spaced apart from each other by at least 6 cm, and in each case comprise a depth of at least 1 cm.

3. The passenger seat (10) of claim 1 or 2,
wherein the indentations (66a, 66b) of the rear surface (20), at least in a sub-region (62) of the rear surface (20) between the seat pan (12) and the center plane (64), are configured so as to be parallel to the seat surface (14) and orthogonal to the lean-against surface (18).

4. The passenger seat (10) of any one of the preceding claims,
wherein the indentations (66a, 66b) are convex in shape and are spaced apart from each other by a concave central region (72).

5. The passenger seat (10) of any one of the preceding claims,
wherein the rear surface (20) above a center plane (64) parallel to the seat surface (14) and of a side of the rear surface (20), which side is opposite the seat surface (14) relative to the center plane (64), comprises a planar region (74);
wherein in the planar region (74) a folding table (58) is arranged on the rear surface (20).

6. The passenger seat (10) of any one of the preceding claims, further comprising:
an adjustment device (84) for adjusting an inclination angle between the seat pan (12) and the backrest (16); and
a seat frame (22) for attaching the seat pan (12) and the backrest (16),
wherein the seat frame (22) comprises a first cross member (24) and a second cross member (26) that are arranged parallel to each other, parallel to the seat surface (14), and parallel to the lean-against surface (18) of the backrest (16);
wherein the seat frame (22) comprises at least one traverse (28, 28a, 28b) that interconnects the first cross member (24) and the second cross member (26); and
wherein the adjustment device (84) comprises at least one joint (86, 86a, 86b) for inclining the backrest (16) relative to the seat pan (12).

7. The passenger seat (10) of claim 6,
wherein the at least one traverse (28, 28a, 28b) is detachably affixed to the cross members (24, 26); and
wherein on the at least one traverse (28, 28a, 28b) a seatbelt (98) is attached that is to be worn by the passenger.

8. The passenger seat (10) of one of claims 6 or 7,
wherein the backrest (16) is designed as a self-supporting back shell (109) and is attached at least indirectly to the at least one joint (86, 86a, 86b) of the adjustment device (84).

9. The passenger seat (10) of one of claims 6 or 7,
wherein the seat frame (22) comprises two traverses (28a, 28b) that extend from the first cross member (24) in the direction of the at least one joint (86, 86a, 86b) of the adjustment device (84);
wherein a spar (88) is arranged on the joint (86, 86a, 86b), which spar (88) is arranged orthogonally to the cross members (24, 26), and to which spar (88) the backrest (16) is attached.

10. The passenger seat (10) of claim 9,
wherein the backrest (16) is attached to the spar (88) in the middle, and
wherein the spar (88) provides a load path for channeling out a force acting on the backrest (16).

11. The passenger seat (10) of any one of the preceding claims,
wherein the backrest (16) is at least in part made from a material selected from the group comprising plastic, aluminum, and carbon fiber reinforced plastic.

12. An aircraft (110) comprising a passenger cabin (112) and a passenger seat (10) of any one of the preceding claims.
